Europäisches Patentamt

European Patent Office

Office européen des brevets

(11) Veröffentlichungsnummer: **0 014 891**
**A1**

## (12) EUROPÄISCHE PATENTANMELDUNG

(21) Anmeldenummer: 80100561.2

(22) Anmeldetag: 04.02.80

(51) Int. Cl.³: **C 08 G 12/38**

(30) Priorität: 09.02.79 DE 2904918

(43) Veröffentlichungstag der Anmeldung:
03.09.80 Patentblatt 80/18

(84) Benannte Vertragsstaaten:
AT BE CH DE FR GB IT LU NL SE

(71) Anmelder: BASF Aktiengesellschaft
Carl-Bosch-Strasse 38
D-6700 Ludwigshafen(DE)

(72) Erfinder: Eisele, Wolfgang, Dr.
Niedererdstrasse 103
D-6700 Ludwigshafen(DE)

(72) Erfinder: Scholz, Fritz
Bergweg 3
D-6145 Lindenfels 2(DE)

(72) Erfinder: Lelgemann, Ludwig
Amsterdamer Strasse 16
D-6700 Ludwigshafen(DE)

(54) Verfahren zur Herstellung von Tränkharzen.

(57) Aminoplastische Tränkharze zur Oberflächenbeschichtung mit den Eigenschaften reiner Melaminharze erhält man durch Vorkondensation von Melamin und Formaldehyd bis zur begrenzten Wasserverdünnbarkeit und eine Nachkondensation in Gegenwart von Formaldehyd und Harnstoff bei hohem pH-Wert.

EP 0 014 891 A1

BASF Aktiengesellschaft                    O.Z. 0050/033657

Verfahren zur Herstellung von Tränkharzen

Die Erfindung betrifft ein Verfahren zur Herstellung von Tränkharzen auf der Grundlage von Melamin-Formaldehyd-Kondensaten, die anstelle von Melamin teilweise Harnstoff einkondensiert enthalten.

Melaminharze werden u.a. zur Herstellung von Oberflächenbeschichtungenvon Span-, Schichstoff- oder härtbare Platten verwendet, wobei man Papier mit der Harzlösung tränkt und die getränkten getrockneten Papiere mit den Rohplatten verpreßt. Sie können zur Verbilligung Harnstoff-Formaldehyd-Kondensat zugesetzt erhalten, bzw. es werden Melamin und Harnstoff gemeinsam mit Formaldehyd kondensiert.

Der Zusatz von Harnstoff wird bisher allerdings mit einer Einbuße an den typischen Qualitätseigenschaften der Melaminharze erkauft: Unter gewissen Voraussetzungen liefern reine Melaminharze harte, kratzfeste, chemikalien- und wasserdampfbeständige Oberflächen mit hohem Glanz und anderen wertvollen Eigenschaften, die beim Verschneiden des Melamins mit Harnstoff z.T. verloren gehen.

Der Wunsch, den Harzen z.B. aus wirtschaftlichen Gründen Harnstoff zuzusetzen, besteht jedoch fort; gleichzeitig wird angestrebt, die Harze zu verbessern z.B. hinsichtlich ihrer Elastizität und Rißbeständigkeit, da Melaminharze, die ohne Mitverwendung gewisser Zusätze (z.B. Carbonsäureamide, Sulfonsäureamide, mehrwertige Alkohole) hergestellt werden, sehr spröde sind.

Es wurde nun gefunden, daß Mischkondensate aus Melamin (M), Harnstoff (H) und Formaldehyd (F) in einem wenigstens zweistufigen Verfahren in wäßriger Lösung erhalten werden, wenn man zunächst Melamin und Formaldehyd in an sich üb-

licher Weise in einem Molverhältnis von F:M oberhalb von
1,6 bis z.B. etwa 2 bis zur begrenzten Wasserverdünnbarkeit
kondensiert und die so erhaltene Harzlösung mit Formaldehyd
und Harnstoff wiederum bis zur beginnenden Wasserunverträglichkeit umsetzt.

Die Umsetzung von Melamin und Formaldehyd in der ersten
Stufe, findet wie üblich im alkalischen pH-Bereich, also
oberhalb von etwa pH 8 statt.

Es ist aus der Sicht der Kondensationsführung unschwierig,
in der ersten Stufe bereits untergeordnete Mengen (z.B.
bis zu 10 Molprozent, also etwa 5 Gewichtsprozent, bezogen
auf Melamin) Harnstoff mitzuverwenden. Jedoch bewirkt
dieser Zusatz im fertigen Harz keine Vorteile.

Erfindungsgemäß werden die so erhaltenen Kondensate
nunmehr mit Formaldehyd und Harnstoff einer zweiten Kondensationsreaktion unterworfen, wobei abweichend von der
gewöhnlichen Kondensationsreaktion von Harnstoff mit Formaldehyd wiederum im alkalischen pH-Bereich gearbeitet wird.

Zur Erzielung eines befriedigenden Ergebnisses werden mindestens 0,1 Mol Formaldehyd je Mol bereits vorhandenen
Formaldehyds der vorhandenen Melaminharzlösung aus der
ersten Kondensationsstufe zugesetzt und zweckmäßig soviel
Harnstoff, daß eine Menge von etwa 25 Gewichtsprozent (40
Molprozent), bezogen auf die Summe von Melamin und Harnstoff
nicht überschritten werden. Natürlich muß die Formaldehydmenge und die Harnstoffmenge in entsprechendem Verhältnis
stehen. Bei größeren Harnstoffmengen (die technisch leicht
möglich sind, wenn entsprechende Mengen Formaldehyd verwendet
werden) tritt allmählich eine Verminderung der Qualitätseigenschaften der Harze ein.

Die Kondensation wird bis zur beginnenden Wasserunverträglichkeit bzw. bis zur begrenzten Wasserverdünnbarkeit weitergeführt.

Die Wasserverdünnbarkeit oder Wasserverträglichkeit ist ein Maß für den Kondensationsgrad.

Die Wasserverträglichkeit wird meistens ausgedrückt als die Wassermenge, die einer Volumeneinheit Harzlösung gewöhnlicher Konzentration (d.h. 50- bis 70prozentig) bei 20°C zugesetzt werden muß, um eine bleibende Trübung hervorzurufen.

Da die Wasserverträglichkeit von der Temperatur abhängt, kann auch der Trübungspunkt als bequem bestimmbares Maß für den Kondensationsgrad verwendet werden. Zur Bestimmung des Trübungspunktes werden einer Volumeneinheit heißer Harzlösung gewöhnlich 5 Volumeneinheiten siedenden Wassers zugesetzt und die Trübungstemperatur bei Abkühlen der Lösung ermittelt. Man stellt zweckmäßig in der ersten Kondensationsstufe einen Trübungspunkt von etwa 40 bis 50°C und in der zweiten Stufe von etwa 45 bis 60°C ein.

Die erhaltenen Harzlösungen sind gewöhnlich etwa 50- bis 60prozentig (Feststoffgehalt ermittelt durch Rückstandsbestimmung bei etwa 120°C während zwei Stunden; grob auch aus den eingesetzten Mengen an Melamin, Harnstoff und Formaldehyd zu errechnen). Sie weisen z.B. eine Viskosität von 30 bis 80 mPa.s auf. Bei der Tränkung ziehen im allgemeinen etwa 110 bis 150 % Harz (trocken, bezogen auf Papiergewicht) auf das Papier auf. Diese Menge ist natürlich von der Papierbeschaffenheit abhängig.

Zur Ermittlung der Qualitätseigenschaften der erzielten Oberflächen, wird die Beschichtung im experimentellen Maßstab vorgenommen. Geschliffene Spanplatten werden also mit den harzgetränkten Papieren - zweckmäßig beidseitig - belegt und bei üblichen Preßbedingungen (Druck; Temperatur) verpreßt. Dabei können zum Vergleich mit den bisher bekannten Harzen übliche Modifizierungsmittel entweder einheitlich zugesetzt oder weggelassen werden. Ein Vergleich mit den besten, nach dem Stand der Technik erhältlichen Ergebnissen, setzt im allgemeinen die jeweilige Verwendung von Modifizierungsmitteln voraus. Die Herstellung der als Ausgangsmaterial benötigten Melaminharze (d.h. der Harze der ersten Umsetzungsstufe) ist z.B. in der deutschen Patentschrift 2 027 085 beschrieben, auf die anstelle einer ausführlicheren Beschreibung verwiesen wird. Man erhält wäßrige Harzlösungen mit einem Feststoffgehalt von etwa 50 bis 70 %, die ohne weitere Maßnahmen verwendet werden können.

Man erwärmt diese Harzlösungen bzw. verwendet noch heiße Harzlösungen, die unmittelbar vorher hergestellt worden sind. Die Temperatur für die Kondensation mit weiterem Formaldehyd und Harnstoff beträgt im allgemeinen etwa 80 bis 100°C. Der Zusatz von Harnstoff kann in Form einer konzentrierten wäßrigen Lösung oder als Feststoff geschehen.

Formaldehyd ist im allgemeinen als 37- bis 40prozentige Lösung verwendbar. Man kann auch formaldehydreiche Vorkondensate, wie sie bei der Absorption von gasförmigem Formaldehyd in Harnstofflösung erhalten werden und handelsüblich sind, verwenden. Es versteht sich, daß bei der Verwendung solcher Harnstoff enthaltender Vorkondensate entsprechend weniger freier Harnstoff in der zweiten Kondensationsstufe erforderlich ist.

C014891

Die Wasserverdünnbarkeit wird im allgemeinen durch laufende Probenahme und Verdünnungstests bestimmt; im großtechnischen Betrieb verwendet man Erfahrungswerte der Kondensationsdauer bei gegebener Temperatur oder verfolgt fortlaufend die Viskositätszunahme.

Die Weiterkondensation wird nach dem Erreichen des gewünschten Kondensationsgrades durch Abkühlung und Einstellen weiterer Alkalizugabe abgebrochen bzw. auf das Maß herabgesetzt, das bei üblicher Lagerung unvermeidlich ist.

Die Verarbeitung erfolgt wie üblich durch Tränken von geeigneten Papieren, Trocknen und weiterhin Verpressen mit dem vorgesehenen Substrat.

Zur Beurteilung der Qualität der erzielten Überflächen dienen

1. Bestimmung des Aushärtegrades:
   Eine 0,2 n Lösung von Salzsäure mit Zusatz von 0,004 % Rhodamin B extra wirkt während 16 Stunden auf die Oberfläche ein. Der Angriff der Chemikalie wird visuell in einer Skala von 0 (kein Angriff) bis 6 (aufgelöste Fläche) eingestuft.

2. Geschlossenheit der Oberfläche: Schwarze Schuhcreme wird auf den zu prüfenden Flächen verrieben und mit Putzwolle wieder entfernt. Das in den Poren verbleibende Pigment wird nach einer Skala von 0 (porenfreie Oberfläche) bis 6 (sehr viele Poren, keine geschlossene Oberfläche) beurteilt.

3. Bestimmung der Vergilbung: Ein auf $225^\circ$ geheizter Stahlstempel wird mit 5 N/mm$^2$ während 3 Minuten auf die Fläche gepreßt. Die Einwirkung wird beurteilt von 0 (keine Veränderung) bis 6 (dunkelbraune Färbung).

4.  Risse in der Fläche. Eine beschichttete Holzspan-
    platte wird während 15 Stunden bei 80°C gehalten.
    Die Beurteilung erfolgt wiederum von 0 (keine
    Risse) bis 6 (von Rissen durchzogene Oberfläche).

5.  Verlust des Glanzgrades bei Wasserdampfeinwirkung:
    Der Glanz einer beschichteten Platte wird nach
    DIN 67530 im unbehandelten und nach Einwirkung von
    Dampf gemäß DIN 53799 (Auflegen der Platte auf einen
    300 ml Weithals-Erlenmeyer-Kolben mit siedendem Wasser
    während einer Stunde) gemessen. Er bezieht sich auf
    einen Beobachtungswinkel von 20° und wurde an der auf
    70°C rückgekühlten Platte bestimmt.

Beispiel 1

5 690 ml 40prozentiger wäßriger Formaldehyd und 2000 ml
Trinkwasser werden mit etwa 6 ml 50prozentiger Kalilauge
auf pH 9,2 eingestellt. Nach Zugabe von 275 g ε-Caprolactam
und 6 160 g Melamin wird in 30 Minuten auf 98°C aufgeheizt
und bis zu einem Trübungspunkt von 49°C kondensiert
(ca. 110 Minuten).

Dann werden weitere 2 720 ml Formaldehydlösung und ca. 4,5
ml Kalilauge (pH 9,2) sodann 1 200 g Harnstoff zugegeben.
Bei 90°C und pH 9,2 wird bis zum Trübungspunkt 50°C kondensiert (ca. 18 Minuten), dann auf 50° gekühlt (ca. 14 Minuten).

Nach Zugabe von 360 ml 1,4-Butandiol, 360 ml Äthylenglykol
und 400 ml Dimethylformamid wird auf 30°C gekühlt und wenn
nötig filtriert.

Kenndaten:

Viskosität                          42,2 mPa.s
pH-Wert                             9,25
Lagerstabilität                    ca. 4 Wochen
Gelierzeit bei 140°C               131 Sekunden
Dichte 20°C                        1,234 g/cm$^3$.

## Beispiel 2

5600 ml Formaldehydlösung und 1600 ml Trinkwasser werden mit Kalilauge auf pH 9,2 eingestellt. Nach Zugabe von 275 g $\mathcal{E}$-Caprolactam und 5777 g Melamin wird in 30 Minuten auf 98°C aufgeheizt und bis zu einem Trübungspunkt von 54°C kondensiert (ca. 110 Min.).

Dann werden weitere 1177 ml Formaldehydlösung, ca. 2 ml Kalilauge und 578 g Harnstoff zugegeben. Bei 90°C und pH 9,0 wird bis zu einem Trübungspunkt von 58°C kondensiert (ca. 20 Min.), dann auf 55°C gekühlt (ca. 10 Min.).

Nach Zugabe von 840 ml Äthylenglykol und 800 ml Dimethylformamid wird auf 30°C gekühlt, filtriert und ein pH-Wert von 9,3 eingestellt:

Kenndaten:

Viskosität           47,6  mPa.s
pH-Wert              9,3
Lagerstabilität      4 Wochen
Gelierzeit bei 140°C 152 Sekunden
Dichte 20°C          1,231 g/cm$^3$.

## Beispiel 3

4800 ml 40prozentiger Formaldehydlösung und 1500 ml Trinkwasser werden mit Kalilauge auf pH 92 eingestellt. Nach Zugabe von 275 g $\varepsilon$-Caprolactam und 4950 g Melamin wird innerhalb von 30 Minuten auf 98°C aufgeheizt und bis zu einem Trübungspunkt von 56°C kondensiert (ca. 60 Min.).

Dann werden weitere 2990 ml Formaldehydlösung, ca. 3 ml Kalilauge (pH 9,0) und 1650 Harnstoff zugegeben. Bei 90°C und pH 8,7 wird bis zu einem Trübungspunkt von 56°C kondensiert (ca. 35 Min.), dann auf 55°C gekühlt (ca. 7 Min.).

Nach Zugabe von 200 ml Butendiol, 360 ml Äthylenglykol und 800 ml Dimethylformamid wird auf 30°C abgekühlt, pH-Wert korrigiert filtriert.

Kenndaten:
Viskosität: 40 mPa.s
pH-Wert: 9,5
Gelierzeit b. 140°C: 155 Sekunden
Dichte bei 20°C: 1,229 g/cm$^3$
Lagerstabilität: 36 Tage.

## Beispiel für die Kurztaktbeschichtung von Spanplatten

Das nach Beispiel 1 erhaltene Harz wurde mit soviel Härter (Morpholinsalz der p-Toluolsulfonsäure) versetzt, daß eine Probe des Harzes in einem Reagenzglas, im Wasserbad auf 100°C erhitzt, nach ca. 6 Minuten eintrübt. Mit diesem Ansatz wurde ein Dekorpapier von 80 g/m$^2$ so imprägniert und getrocknet, so daß ein Harzauftrag von ca. 130 % bei einem V.C.-Wert von 6 bis 7 % (5 Minuten bei 160°C) erhalten wurde. Bei einer Preßtemperatur von 190°C wurden die Filme

mit einem Zulagepolster in 50 Sekunden mit einem Druck von 2 N/mm$^2$ auf Spanplatten verpreßt.

Zum Vergleich wurden Beschichtungen mit einem handelsüblichen, vergleichbar modifizierten Melamin-Tränkharz (Vergleichsversuch A), einem konventionell, d.h. unter Verwendung einer Mischung von 80 % Melamin und 20 % Harnstoff kondensierten Mischkondensat (Vergleichsversuch B) und einer Mischung im Verhältnis 80:20 aus jeweils für sich kondensiertem Melamin- und Harnstoffharz (Vergleichsversuch C) durchgeführt.

Die Eigenschaften der Flotten und die Auswertungsergebnisse der beschichteten Platten sind in der beiliegenden Tabelle nebeneinander gestellt.

Tabelle

| Harz | Härter-menge % | Gelier-zeit sek | Flotten-stabilität n | Härtung Skala 0-6 | Geschlos-senheit Skala 0-6 | 3'/225°C Vergil-bung Skala 0-6 | Risse 15 h/ 80°C | Glanz-grad | Glanz-verlust beim Wasser-dampf-test |
|---|---|---|---|---|---|---|---|---|---|
| Erfindungs-gemäßes Harz | 0,5 | 390 | 60 | 3 | 2 | 3 | keine | 108 | ca. 30 % |
| Vergleichs-versuch A | 1,1 | 450 | 30 | 4 | 3 | 3 | keine | 102 | ca. 50 % |
| handelsüblicher Vergleichs-versuch B | 0,5 | 300 | 30 | 2 | 2 | 4 | keine | 112 | ca. 35 % |
| Vergleichs-versuch C | 0,5 | 270 | 30 | 2 | 2 | 5 | keine | 98 | ca. 40 % |

BASF Aktiengesellschaft          -11-          O.Z. 0050/033657

Patentansprüche

1. Verfahren zur Herstellung von Tränkharzen durch wenigstens zweistufige Mischkondensation von Melamin und Harnstoff mit Formaldehyd in wäßriger Lösung, dadurch gekennzeichnet, daß man in einer ersten Kondensationsstufe in an sich bekannter Weise Melamin (M) mit Formaldehyd (F) in einem Molverhältnis F:M von wenigstens 1,6 bei einem anfänglichen pH-Wert von etwa 8 bis 10,5 bis zur begrenzten Wasserverdünnbarkeit kondensiert, in einer zweiten Kondensationsstufe wenigstens 0,1 Mol Formaldehyd je Mol bereits vorhandenen Formaldehyds und so viel Harnstoff (H), daß ein Gesamtmolverhältnis von F:(M+H) von 1,4 bis 2 erhalten wird, mindestens jedoch 10 Molprozent Harnstoff, bezogen auf die Molsumme von Melamin und Harnstoff zusetzt und insgesamt bis zu 40 Molprozent Harnstoff vorhanden sind und bei einem pH-Wert von 8,5 bis 10, der durch laufende Alkalizugabe im wesentlichen konstant gehalten wird, bis zur begrenzten Wasserverdünnbarkeit kondensiert.

2. Verfahren nach Anspruch 1, dadurch gekennzeichnet, daß man als Maß für die begrenzte Wasserverdünnbarkeit in der ersten Stufe einen Trübungspunkt von 40 bis 50°C, und in der zweiten Stufe von 45 bis 60°C wählt.

**Europäisches Patentamt**

# EUROPÄISCHER RECHERCHENBERICHT

Nummer der Anmeldung

EP 80 10 0561

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 123 579 (McCASKEY) <br> * Spalte 1, Zeile 50 bis Spalte 2, Zeile 6; Beispiel 1 * <br> -- | 1 |
| A | DE - A1 - 2 455 420 (LENTIA) <br> -- | |
| A | DE - A - 2 027 085 (SÜDDEUTSCHE KALK-STICKSTOFF-WERKE) <br> * Seite 4, Absatz 2; Beispiel 4 * <br> ----- | |

**KLASSIFIKATION DER ANMELDUNG (Int.Cl.3)**

C 08 G 12/38

**RECHERCHIERTE SACHGEBIETE (Int. Cl.3)**

C 08 G 12/00

C 08 L 61/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 19-05-1980 | KRAIL |

EPA form 1503.1 06.78